# EUROPEAN PATENT SPECIFICATION

(11) **EP 0 699 143 B1**
(45) Date of publication and mention of the grant of the patent: **29.03.2000**
(21) Application number: 94917202.7
(22) Date of filing: 25.05.1994
(51) Int. Cl.: B60R 19/24

(54) **BUMPER ASSEMBLY**
STOSSSTANGE
PARE-CHOCS

(30) Priority: 25.05.1993 NO 931900
(43) Date of publication of application: 06.03.1996
(73) Proprietor: NORSK HYDRO a.s., 0240 Oslo (NO)
(72) Inventor: CLAUSEN, Edvin, List, DK-6270 Tonder (DK); L KKE, Thomas, DK-6270 Tonder (DK)
(74) Representative: Patentanwälte Leinweber & Zimmermann
(86) International application number: NO9400098
(87) International publication number: WO9427841

(56) References cited:
- EP-A- 0 546 352
- DE-A- 4 040 459
- DE-A- 4 127 597
- US-A- 3 146 014
- US-A- 4 088 357

## Description

The present invention relates to a bumper assembly for vehicles, and more particularly to improvement in the connection between the bumper and the front/rear longitudinal structural members of the vehicle frame.

Various bumper assemblies known from the prior art are provided with reinforcing or energy absorbing members disposed between the bumper and pair of front members. Customarily the bumper is not a part of the vehicle frame's main structure, but a so-called "hang on part" connected to the frame structure by bolts or via an energy absorbing component.

Generally more complicated and heavy bumper assemblies are thus provided contrary to the demand for light weight simple assemblies of the vehicle structure.

In order to reduce the vehicle weight and maintain the stiffness the bumper is nowadays a part of the main frame forming a front/rear cross member and often welded onto the rain structure.

Consequently, the conventional hydraulic or mechanic energy absorbing elements between bumper and front/rear members can not be used. Thus new requirements to the structure performance have to be met in order to avoid a high initial peak load during a vehicle crash. This peak load is presently tried to be reduced by weakening the front/rear members by pre-deformation, perforation or reduction of their size (cross-section) something which in turn adversely effects the strength of the body structure.

DE 41 27 597 A1 shows a bumper assembly comprising a pre-deformed hollow front/rear member, the frontal area thereof being extended towards the bumper beam.

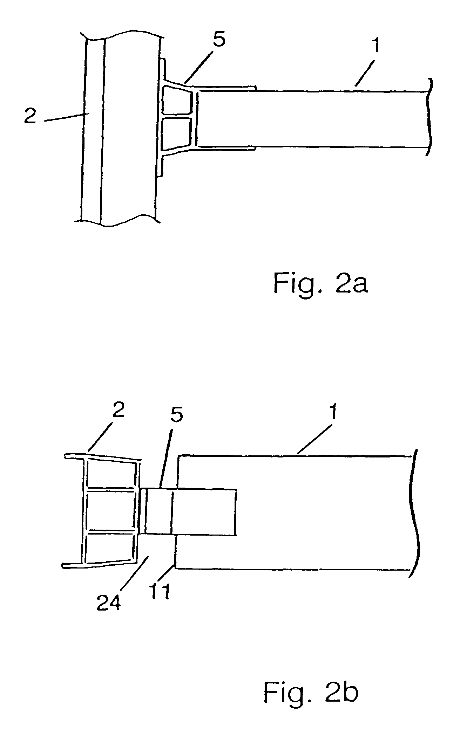

US-A-4,088,357 shows a bumper assembly comprising a hollow plastic front/rear member being open to the side of and attached to a longitudinally extending member 19 by a construction embracing said bearer 19 by means of bars 18, cf. Fig. 2. Said bumper beam and said attaching construction are meant to prevent bearer 19 from damages. Particularly, there is no intention of deformation of bearer 19 during the initial stage of a collision.

In view of the above, it is an object of the present invention to provide a novel light weight bumper assembly avoiding the above disadvantages of the prior art, reducing a peak load during the initial phase of collapse of the front/rear members and thereby the effects of a collision or alike upon the rest of the vehicle body and vehicle occupance.

The above object is achieved by a bumper assembly according to claim 1. Preferred embodiments are claimed in claims 2 to 4.

This novel inventive design of the connection between the bumper and the front/rear members, where a main part of the load from the bumper during an impact is directed into a limited frontal area of the member, provides unstable conditions on the members at an early (initial) stage of the collision. This ensures a controlled collapse of the members by a free, unobstructed deformation of their frontal parts and thus limiting the initial peak load.

Other objects, specific features and advantages of the present invention will be apparent from the following detailed description of preferred embodiments with reference to the accompanying drawings, Figs. where
- Fig. 1a: is a schematic top view of an assembly employable in the present invention,
- Fig. 1b: is a schematic cross-sectional view of the assembly taken along line I-I in Fig. 1a, and
- Fig. 1c: illustrates schematically in a cross-sectional view the assembly corresponding to Fig. 1b after exposure to a front impact load,
- Fig. 2: is a schematic top view and cross-sectional view of another particular embodiment of the assembly (Figs. 2a and 2b, respectively), and
- Fig. 3: is a graphic illustration of the relation between the applied load and longitudinal displacement of the bumper assembly constructed in accordance with the present invention.

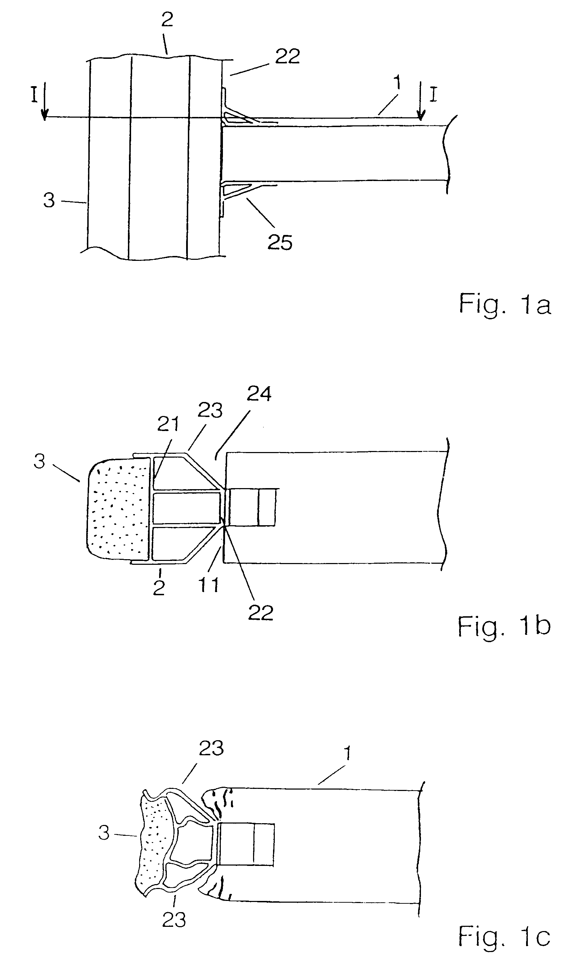

Referring to the drawings and particularly to Fig. 1 a bumper assembly is schematically illustrated in a top view (1a) and in a cross-sectional view (1b) taken along lines I-I in Fig. 1a. The bumper assembly comprises a bumper bean 2 having a box-shaped configuration defined by a front wall 21, representing a load surface accomodating a conventional energy absorbing bar 3, and a rear wall 22 facing and transversely fastened to a longitudinally extending front or rear structural member 1 of a vehicle body, representing a load transferring contact area between the members and the bumper. The front and rear walls 21,22 are interconnected by side walls 23.

The bumper beam 2 being typically extruded as a multichamber hollow shape in light metal (aluminium or Al-alloy) has an outer configuration allowing the connecting rear wall 22 to cover only a portion of the frontal area 11 of the longitudinal member 1. Furthermore, a free space 24 is provided between the free perimeter of the frontal area and the bumper beam 2 by means of diverging side walls 23 connecting the rear wall 22 and the front wall 21 of the bumper beam. It is essential for the present innovative principle that such connection resulting in unstable front walls of the members 1 under exposure to an axial impact load via bumper beam 2 allows for folding of the longitudinal member around the bumper beam 2 thanks to the provision of the free space 24 extending towards the beam as illustrated in Fig. 1c.

Referring to Fig. 2, the beam assembly according to another embodiment of the present invention is illustrated in a top view (Fig. 2a) and a cross-sectional view (Fig. 2b), respectively. A conventional substantially rectangular bumper 2 is connected to the front member 1 by means of a connector 5 having a cross-sectional area less than the available frontal area of the front member 1, thus ensuring the required free space 24 between the remaining free frontal area 11 of the front member and the bumper beam 2.

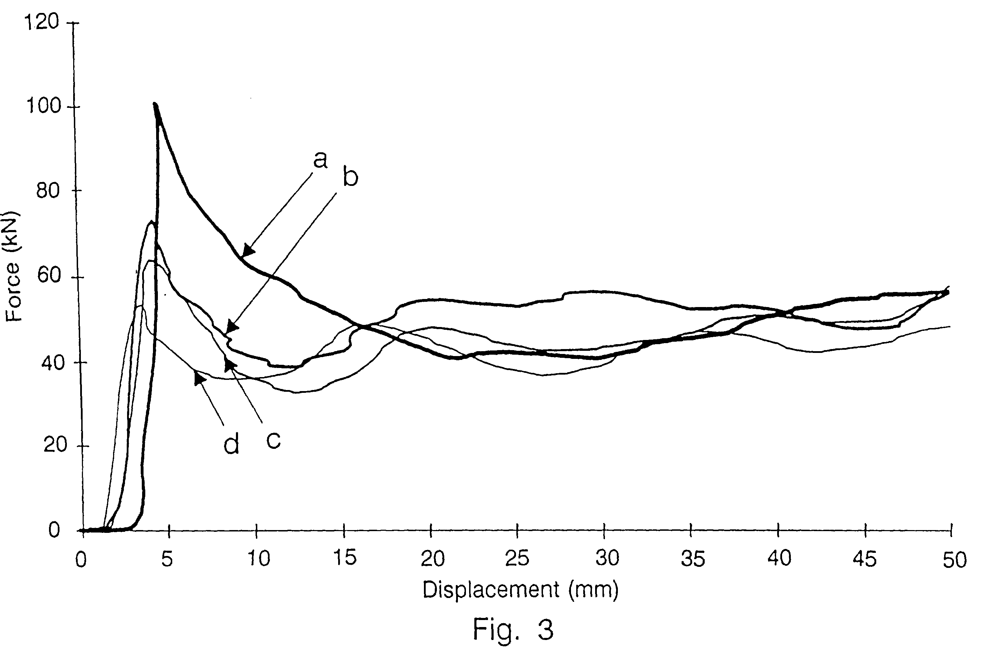

Tests conducted on the bumper assembly provided in accordance with the above described inventive principle and examplified by different employable embodiments thereof, show a successive reduction of the registered peak load with decreasing load transferring contact area between the bumper beam and the front/rear members. Fig. 3 illustrating in the form of a diagram horizontal displacement of the assembly in mm versus measured load in kN confirms that the actual peak load during the initial stage of a simulated collision is reduced by nearly 50% as a function of gradually reducing the contact area between the bumper beam and the frontal part of longitudinal members from a complete 100% contact (curve a) to a contact area reduced to 40% (curve d) of the available cross-sectional area. Curves b and c represent reduction of the contact area to 80 and 60%, respectively. As it appears from the diagram the artificial unstability created in the front walls of the members resulting in free collapse/deformation of the unconnected frontal parts of the members into the provided free space lowers efficiently the initial peak load and thus avoiding excessive damages to the vehicle body structure, and last but not least reducing the risk of personal injuries for the occupants of the vehicle.

An optimal reduction of the actual load transferring contact area will in practice be determined by taking into account also other factors like geometry (configuration) of the applied extruded members, their positioning etc.

The present invention is not limited to the above described and illustrated preferred features and embodiments thereof. It is to be understood that various changes and modifications may be made to the specifically described and illustrated arrangements without departing from the scope of the present invention.

## Claims

1. A bumper assembly in a vehicle body comprising a bumper beam (2) transversely attached to a pair of front/rear longitudinally extending members (1) constituting a part of the front/rear structure of the vehicle body,
characterized in that
only a portion of the available frontal area (11) of the members (1) is exposed to load from the bumper beam (2), forming a connection of reduced load transferring area and ensuring a free space (24) between the remaining unconnected frontal area of the longitudinal members and the bumper beam (2), so that said members (1) are deformed during the initial stage of a collision to extend into said free space (24).

2. The assembly according to claim 1,
characterized in that
a contact load transferring area of the connection between the beam (2) and the members (1) is in a range from 40 to 80% of the total available frontal area of the members.

3. The assembly according to claim 1 or 2,
characterized in that
the cross-sectional configuration of the bumper beam (2) comprises a rear wall (22) of reduced load transferring area compared to the area of a front wall (21) and where the rear wall (22) is directly connected to the longitudinal member (1).

4. The assembly according to claim 1 or 2,
characterized in that
a separate connector (5) is inserted between and attached to the bumper beam (2) and the longitudinal member (1), the connector having a load transferring cross-sectional area at least towards the longitudinal member (1) less than the available frontal area of the longitudinal member.

## Patentansprüche

1. Stoßstangenanordnung in einer Fahrzeugkarosserie, enthaltend einen Stoßstangenträger (2), der an einem Paar von vorderen/hinteren, in Längsrichtung verlaufenden Elementen (1), die einen Teil des vorderen /hinteren Aufbaues der Fahrzeugkarosserie bilden, quer verlaufend angebracht ist,
dadurch gekennzeichnet, daß
nur ein Abschnitt der zur Verfügung stehenden Stirnfläche (11) der Elemente (1) der Last von dem Stoßstangenträger (2) ausgesetzt ist, wobei eine Verbindung mit einer reduzierten Lastübertragungsfläche gebildet wird und ein freier Raum (24) zwischen der verbleibenden nicht verbundenen Stirnfläche der in Längsrichtung verlaufenden Elemente und dem Stoßstangenträger (2) sichergestellt ist, so daß die Elemente (1) während der Anfangsphase einer Kollision so verformt werden, daß sie sich in den freien Raum (24) erstrecken.

2. Anordnung nach Anspruch 1,
dadurch gekennzeichnet, daß
eine Kontaktlastübertragungsfläche der Verbindung zwischen dem Träger (2) und den Elementen (1) in einem Bereich von 40 bis 80% der gesamten zur Verfügung stehenden Stirnfläche der Elemente liegt.

3. Anordnung nach Anspruch 1 oder 2,
dadurch gekennzeichnet, daß
der Aufbau des Stoßstangenträgers (2) im Querschnitt eine Rückwand (22) mit reduzierter Lastübertragungsfläche im Vergleich zu der Fläche einer Vorderwand (21) umfaßt, wobei die Rückwand (22) direkt mit dem in Längsrichtung verlaufenden Element (1) verbunden ist.

4. Anordnung nach Anspruch 1 oder 2,
dadurch gekennzeichnet, daß
ein separates Verbindungselement (5) zwischen den Stoßstangenträger (2) und das in Längsrichtung verlaufende Element (1) eingesetzt und an diesen befestigt ist, welches Verbindungselement eine Last übertragende Querschnittsfläche hat, die mindestens zu dem in Längsrichtung verlaufenden Element (1) hin kleiner ist als die zur Verfügung stehende Stirnfläche des in Längsrichtung verlaufenden Elements.

## Revendications

1. Ensemble de pare-chocs d'une carrosserie d'automobile comportant une poutre de pare-chocs (2) fixée transversalement à deux organes avant/arrière s'étendant longitudinalement (1) constituant une partie de la structure avant/arrière de la carrosserie, caractérisé en ce que
seule une partie de la surface frontale disponible (11) des organes (1) est exposée à une charge provenant de la poutre de pare-chocs (2), en formant une connexion ayant une surface de transfert de charge réduite et assurant un espace libre (24) entre la zone frontale non-connectée restante des organes longitudinaux et la poutre de pare-chocs (2), de sorte que lesdits organes (1) sont déformés pendant l'étape initiale d'une collision pour s'étendre à l'intérieur dudit espace libre (24).

2. Ensemble selon la revendication 1, caractérisé en ce que
la surface de transfert de charge par contact de la connexion entre la poutre (2) et les organes (1) est dans la plage allant de 40 à 80 % de la surface frontale disponible totale des organes.

3. Ensemble selon la revendication 1 ou 2, caractérisé en ce que
la configuration en coupe de la poutre de pare-chocs (2) comporte une paroi arrière (22) ayant une surface de transfert de charge réduite comparée à la surface d'une paroi avant (21) et dans lequel la paroi arrière (22) est reliée directement à l'organe longitudinal (1).

4. Ensemble selon la revendication 1 ou 2, caractérisé en ce que
un connecteur séparé (5) est inséré entre la poutre de pare-chocs (2) et l'organe longitudinal (1) et fixé entre ceux-ci, le connecteur ayant une surface, en coupe transversale, de transfert de charge, au moins on direction de l'organe longitudinal (1), plus petite que la surface frontale disponible de l'organe longitudinal.
